# EUROPÄISCHE PATENTSCHRIFT

(11) **EP 0 914 702 B1**
(45) Veröffentlichungstag und Bekanntmachung des Hinweises auf die Patenterteilung: **10.04.2002**
(21) Anmeldenummer: 97929022.8
(22) Anmeldetag: 10.07.1997
(51) Int. Cl.: H02J 9/06

(54) **NETZGERÄT**
POWER PACK
BLOC D'ALIMENTATION

(30) Priorität: 23.07.1996 AT 132896
(43) Veröffentlichungstag der Anmeldung: 12.05.1999
(73) Patentinhaber: Siemens Aktiengesellschaft Österreich, 1210 Wien (AT)
(72) Erfinder: SCHWEIGERT, Harald, A-1120 Wien (AT); KRANISTER, Andreas, A-3150 Wilhelmsburg (AT)
(74) Vertreter: Matschnig, Franz, Dipl.-Ing.
(86) Internationale Anmeldenummer: AT9700163
(87) Internationale Veröffentlichungsnummer: WO9804026

(56) Entgegenhaltungen:
- EP-A- 0 458 510
- US-A- 5 099 410
- PATENT ABSTRACTS OF JAPAN vol. 017, no. 673 (P-1658), 10.Dezember 1993 & JP 05 224786 A (NEC CORP), 3.September 1993
- PATENT ABSTRACTS OF JAPAN vol. 095, no. 003, 28.April 1995 & JP 06 351258 A (MEIDENSHA CORP), 22.Dezember 1994
- PATENT ABSTRACTS OF JAPAN vol. 010, no. 007 (P-419), 11.Januar 1986 & JP 60 163113 A (SEIKO DENSHI KOGYO KK), 26.August 1985
- PATENT ABSTRACTS OF JAPAN vol. 017, no. 028 (E-1308), 19.Januar 1993 & JP 04 251522 A (KANZAKI PAPER MFG CO LTD), 7.September 1992

## Beschreibung

Die Erfindung bezieht sich auf ein Netzgerät zur Versorgung von direkt oder über einen Umrichter an einem Gleichspannungszweig des Netzgerätes liegenden Verbrauchern, mit einem aus dem Netz aufladbaren Pufferkondensator, der den Gleichspannungszweig bei Netzausfall oder -einbruch noch eine bestimmte Mindestzeitdauer versorgt

Bei elektrischen Energieumsetzern sind meist Pufferkondensatoren vorhanden, z.B. bei Schaltnetzteilen mit einer Zwischenkreisspannung Bei großem Netzspannungsbereich sind solche Pufferkondensatoren auf die maximale Spannung auszulegen Es muß aber damit gerechnet werden, daß im Zeitpunkt eines Netzausfalles die Kondensatoren nur auf die der minimalen Netzspannung entsprechende Zwischenkreisspannung aufgeladen sind. Wegen der quadratischen Abhängigkeit des Energieinhaltes eines Kondensators von der Spannung liegt die gespeicherte Energie weit unter dem möglichen Maximum, sodaß die Pufferzeit zu klein wird, um beispielsweise noch eine Datensicherung in dem Verbraucher zu ermöglichen.

Unabhängig von dem Problem des Energieinhaltes kann es bei Speisung aus Wechselstromnetzen durch das periodische, impulsförmige Nachladen der Kondensatoren zu extremen Verzerrungen und entsprechend hohem Oberwellengehalt im Wechselstromnetz kommen.

Zur Beseitigung oder Minderung dieser Probleme sind drei unterschiedliche Lösungsansätze bekannt geworden:
a) Man erweitert den Arbeitsbereich des Verbrauchers (Umsetzers) zu niedrigeren Versorgungsspannungen, wodurch die Pufferkondensatoren bei Aufrechterhaltung der Funktion des Verbrauchers auf eine niedrigere Spannung entladen werden können. Nachteilig bei dieser Lösung sind hohe Entwicklungskosten, da man bald an die Grenzen der technischen Realisierbarkeit stößt, eine ineffiziente Nutzung des Umsetzers sowie ein Nichtberücksichtigen der Verzerrungen
b) Der Pufferkondensator wird hinsichtlich des notwendigen Energieinhalts auf die minimaie Versorgungsspannung dimensioniert. Dies führt dazu, daß der Pufferkondensator einerseits erheblich überdimensioniert ist und andererseits nur ein Teil seines Speichervermögens genutzt wird. Gewicht, Volumen und Preis des Pufferkondensators nehmen unerwünschte Werte an und die Netzverzerrungen werden noch größer.
c) Durch Vorschalten einer stabilisierten Hochsetzstufe wird die Spannung an dem Pufferkondensator unabhängig von Schwankungen der Netzspannung auf einem festen Wert gehalten Diese Lösung, die eine eigene Schaltnetzteilstufe erfordert, löst zwar die beiden oben genannten Probleme, allerdings muß ein sehr hoher Aufwand für die Entwicklung und Realisierung ebenso in Kauf genommen werden, wie ein großerer Raumbedarf.

Aus der EP 0 525 898 A2 geht eine Schaltung ais bekannt hervor, die über einen kapazitiven Spannungsteiler einen Speisestrom für die Ansteuerschaltung eines gesteuerten Schalters gewinnt, um bei Inbetriebnahme der Schaltung deren Hochlaufen zu ermöglichen. Ein Pufferkondensator oder dessen gesteuertes Aufschalten sind nicht geoffenbart.

Die EP 0 622 889 A2 beschreibt ein Schaltnetzteil, das als Vorregler z.B. für Fernsehgerate dienen soll, und bei dem die Gleichspannung an einem Lastkondensator mittels eines FET-Schalttransistors so geregelt wird, daß diese Spannung bei verschiedenen Netzwechselspannungen, z.B. 240 V und 120 V, im wesentlichen immer gleich groß ist. Der Lastkondensator liegt immer parallel zur Last und kann nicht als Pufferkondensator angesehen werden.

Die aus der EP 0 223 316 A2 hervorgehende Schaltung ist ein Hochsetzsteller mit variabler Schaltfrequenz, der einen standig parallel zur Last liegenden Lastkondensator, einen Kondensator eines LC-Eingangsfilters sowie einen Kondensator eines RC-Integrationsgliedes, nicht jedoch einen zuschaltbaren Pufferkondensator besitzt.

In der EP 0 256 569 A1 ist ein Netzteil mit einem Längsregler beschrieben, welcher auf solche Weise angesteuert wird, daß die Spannungswelligkeit an der Last gegen Null geht, wobei der Längsreglertransistor nur die minimal mögliche Verlustleistung zu vernichten hat, da an ihm nur die Wechselspannungskomponente anliegt. Auch hier liegt ein Lastkondensator immer parallel zu Last; irgendwelche zuschaltbare Pufferkondensatoren sind nicht geoffenbart.

Der Erfindung liegt die Aufgabe zugrunde, eine einfachere und billigere Lösung der weiter oben angegebenen Probleme, die im Zusammenhang mit Pufferkondensatoren auftreten, zu finden

Diese Aufgabe wird mit einem Netzgerät der eingangs genannten Art gelöst, bei welchem der Pufferkondensator über eine eigene Ladeschaltung auf eine Spannung aufladbar ist, die - unabhängig von Spannungsschwankungen im Gleichspannungszweig - im wesentlichen konstant ist und im wesentlichen dem oberen Grenzwert der Gleichspannung entspricht, auf welchen das Netzgerät dimensioniert ist, und der Pufferkondensator über einen gesteuerten Schalter bei Unterspannung im Netz oder im Gleichspannungszweig an den Gleichspannungszweig aufschaltbar ist.

Die Erfindung ermöglicht es, daß der Pufferkondensator (oder die Pufferkondensatoren) immer auf die maximale Spannung aufgeladen sein kann, sodaß er ein Maximum an Energie speichert, der in der Folge eine maximale, konstante Pufferzeit entspricht. Eine Uberdimensionierung des Kondensators ist damit nicht mehr erforderlich Da der Pufferkondensator nur einmal aufgeladen und nicht periodisch entladen/aufgeladen wird, führt seine Verwendung auch nicht zu einem erhöhtem Oberwellengehalt in einem Wechselstromnetz

Die Versorgungsspannung, im allgemeinen eine Zwischenkreisspannung, liegt somit direkt an dem Verbraucher bzw. an dem diesen vorgeschalteten Umsetzer, der Pufferkondensator wird über eine Ladeschaltung, die z B. ein Spannungsvervielfacher, ein einfacher Sperrwandler od.dgl. sein kann, auf seine vorgesehene und zulässige Maximalspannung aufgeladen, wobei nach dem Aufladen nur noch die Kondensatorleckströme kompensiert werden müssen. Bei Erkennen eines Netzausfalls wird der Pufferkondensator (oder eine Serien- und/oder Parallelschaltung von Pufferkondensatoren) mit Hilfe eines geeigneten Schalters, insbesondere Halbleiterschalters, wie Thyristor, Triac etc. auf den Verbraucher oder Zwischenkreis zugeschaltet.

Weitere Merkmale der Erfindung sind in den abhängigen Unteransprüchen gekennzeichnet.
Die Erfindung samt anderer Vorteile ist im folgenden an Hand beispielsweiser Ausführungsformen näher erläutert, die in der Zeichnung veranschaulicht sind. In dieser zeigen Fig. 1 ein Blockschaltbild einer ersten Ausführungsform der Erfindung, Fig 2 ein Blockschaltbild einer zweiten Ausführungsform der Erfindung und Fig 3 ein detailiertes Schaltbild einer praxisorientierten Ausführung der Erfindung.

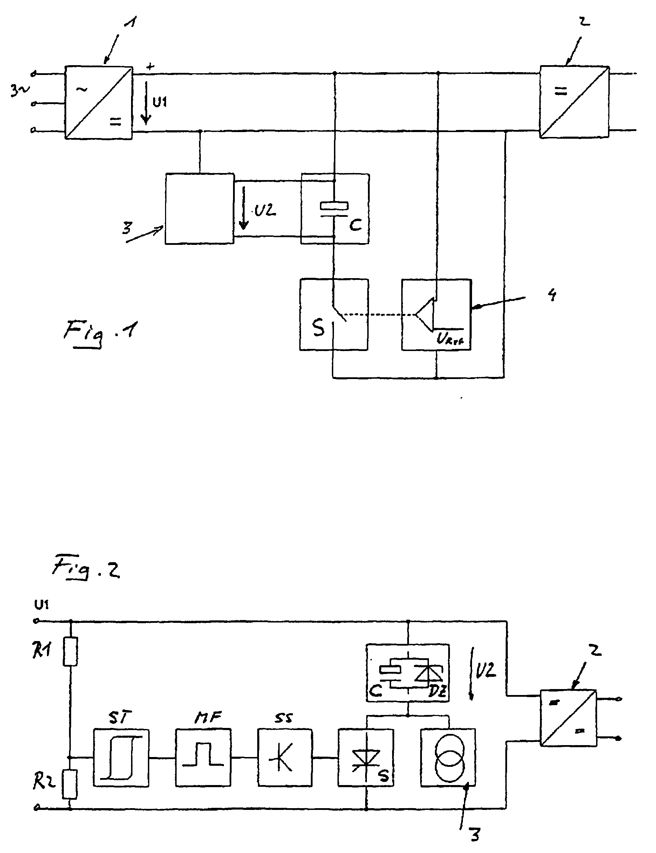

Aus Fig. 1 geht ein Netzgerät hervor, bei welchem ein Gleichrichter- und Eingangsteil 1 an drei Phasen eines Wechselspannungsnetzes liegt. Am Ausgang des Gleichrichters- und Eingangsteils 1, der neben Gleichrichtern auch Filter etc. enthalten kann, liegt eine Zwischenkreis- Gleichspannung U1, die wiederum einem Umrichter 2 zugeführt ist, an dessen Ausgang ein nicht gezeigter Verbraucher liegt bzw. mehrere Verbraucher liegen, beispielsweise Rechner, Logikbausteine, Motoren etc. Der Umrichter 2 kann beispielsweise eine Zwischenkreisspannung von 320 V in eine Gleichspannung von 24 V umrichten.

Für den Zwischenkreis ist ein Pufferkondensator C vorgesehen, der jedoch nicht, wie nach dem Stand der Technik, ständig an der Zwischenkreisspannung U1 liegt. Vielmehr ist er über einen gesteuerten Schalter S dem Zwischenkreis, d.h. dem Eingang des Umrichters 2 parallelschaltbar und er wird über eine eigene Ladeschaltung 3 auf eine Spannung U2 aufladbar, die größer als der Maximalwert der Gleichspannung U1 im Zwischenkreis ist. Die Spannung U2 kann beispielsweise durch Spannungsverdopplung aus dem Wechselstromnetz gewonnen werden und daher das Doppelte von U1 betragen (U2= 2.U1). Die Ladeschaltung 3 kann natürlich auch von der Zwischenkreisspannung versorgt werden.

Es ist ersichtlich, daß der Kondensator C im normalen Betrieb weder geladen noch entladen wird, sieht man von unvermeidbaren Leckstromen ab.

Der Schalter S wird von einer Ansteuerschaltung 4 gesteuert, die zum Vergleich der Zwischenkreisspannung U1 mit einer Referenzspannung U_{Ref} eingerichtet ist und den Schalter S so ansteuert, daß dieser schließt, falls die Zwischenkreisspannung U1 unter einen bestimmten Wert fällt. Es ist jedoch ebenso ein Vergleich der Spannung im Wechselstromnetz mit einem Referenzwert möglich, um so einen Netzausfall oder Netzeinbruch feststellen zu können.

Bei Netzspannungsabfall unter einen bestimmten Wert wird jedenfalls der auf die Spannung U2 geladene Pufferkondensator C an den Umrichter 2 aufgeschaltet, der somit noch über eine bestimmte Pufferzeit den oder die Verbraucher mit elektrischer Energie versorgt. Dies ist bekanntlich in kritischen Anwendungen erforderlich, beispielsweise um noch Daten zu sichern oder um einen Stellvorgang zu beenden. Es versteht sich, daß z.B. mittels einer Diode, dafür gesorgt werden muß, daß bei Zuschalten des Kondensators C dessen Energie nicht in den Eingangsteil 1 fließen kann.

Ganz allgemein läßt sich zu der Spannung U2 an dem Kondensator C sagen, daß sie, unabhängig von der Netzspannung, einen Wert aufweisen soll, der dem höchsten für den Pufferkondensator C sowie für die an den Gleichspannungszweig angeschlossenen Verbraucher zuträglichen Wert entspricht.

Gemäß Fig. 2 wird die Gleichspannung U1, z.B. eine Zwischenkreisspannung nach Teilung durch einen Spannungsteiler R1/R2 einem Schmitt-Trigger ST zugeführt, dessen Schwellenspannung der Referenzspannung U_{Ref} der Fig 1 entspricht. Dem Schmitt-Trigger ST folgt ein Monoflop MF, dem eine Steuerstufe SS für einen Thyristorschalter S nachgeordnet ist. Der Thyristorschalter S liegt in Serie mit dem Pufferkondensator C, dem zur Spannungsbegrenzung eine Zenerdiode DZ parallelgeschaltet ist. Der Pufferkondensator C wird von der Ladeschaltung 3, hier als Stromquelle dargestellt, geladen.

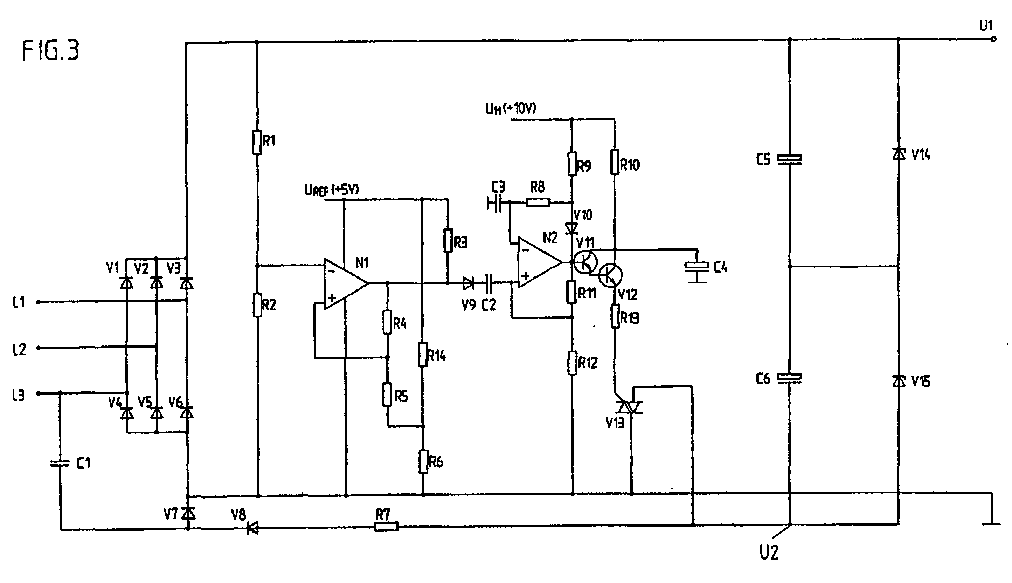

Eine in der Praxis durchgefuhrte Realisierung wird nun an Hand der Fig.3 erläutert. Es liegt ein 3-Phasen Wechselstromnetz vor, aus dem ein Brückengleichrichter V1 ..V6 die Zwischenkreisspannung U1 erzeugt, beispielsweise 540V Diese Spannung liegt, gegebenenfalls nach Siebung durch Kondensatoren und eine Drossel (nicht gezeigt) an dem Verbraucher, z.B. einem Umrichter.

Im vorliegenden Beispiel sind als Pufferkondensatoren zwei in Serie geschaltete Elektrolytkondensatoren C5, C6 vorgesehenen, die je auf ca. 360V aufgeladen werden sollen Hier ist eine bekannte Spannungsverdopplerschaltung, bestehend aus dem Kondensator C1 und den Dioden V7 und V8 vorgesehen, welche über einen den Ladestrom begrenzenden Widerstand R7 die Kondensatoren C5, C6 lädt. Die maximale an jedem Kondensator C5 bzw. C6 liegende Spannung wird je durch eine parallelgeschaltete Zenerdiode V14 bzw. V15 festgelegt, im vorliegenden Beispiel auf je 360V, sodaß die Gesamtspannung an C5 + C6 720V beträgt.

Ein durch einen Spannungsteiler R1/R2 festgelegten Teil der Zwischenkreisspannung U1 wird dem invertierenden Eingang eines Operationsverstärkers N1 zugeführt, der zusammen mit den Widerständen R4, R5, R6 und R14 einen Schmitt-Trigger bildet. Der Verstärker N1 wird von einer Spannung U_{Ref}, im vorliegenden Fall +5 Volt, versorgt.

Bei Netzausfall sinkt die Spannung U1 und damit auch die am Spannungsteiler R1/R2 liegende Spannung, wobei ab einem bestimmten Wert der über einen pull-up-Widerstand R3 an U_{Ref} liegende Ausgang des Schmitt-Triggers auf einen positiven Pegel springt. Dieser Spannungssprung gelangt über eine Diode V9 und einen Kondensator C2 an den nicht invertierenden Eingang eines weiteren Operationsverstärkers N2, wobei der Kondensator C2 zusammen mit dem Widerstandsnetzwerk R3, R11, R12 ein Differenzierglied bildet.

Der invertierende Eingang des Verstärkers N2, welcher gleichfalls von der Spannung U_{Ref} versorgt wird, liegt über die Serienschaltung zweier Widerstände R8 und R9 an einer Hilfsspannung U_{H}, hier +10 Volt, und über einen Kondensator C3 an Masse Der Verbindungspunkt der Widerstände R8 und R9 liegt über eine Diode V10 am Ausgang des Verstärkers N2, welcher einerseits über die Serienschaltung eines Widerstandes R11 und des bereits erwähnten Widerstandes R12 an Masse und andererseits an der Basis eines Darlington-Transistorpaares V11+V12 liegt. Die Kollektoren dieses Paares liegen über einen Widerstand R10 an der Hilfsspannung U_{H} und über einen Kondensator C4 an Masse. Der Emitter des Transistors V12 liegt über einen Widerstand R13 am Gate eines TRIAC-Schalters V13, dessen Schaltstrecke zwischen dem negativen Pol der Pufferkondensator-Serienschaltung C5+C6 und Masse. Der TRIAC V13 entspricht somit dem Schalter S der Fig 1 und 2

Sobald über den Kondensator C2 der oben beschriebene Impuls an den nicht invertierenden Eingang des Verstärkers N2 gelangt, sperrt dieser und es wird über den Spannungsteiler R9, R11, R12 am nichtinvertierenden Eingang ein entsprechender Spannungspegel, von z.B. 2,5 Volt erzwungen, bis sich der Kondensator C3 über die Widerstände R8 und R9 auf den gleichen Wert aufgeladen hat Während dieser Zeit tritt an der Basis des Darlington Paares V11/V12 ein Spannungsimpuls, beispielsweise mit 4,7V/27ms, auf, und das Darlington Paar V11/V12 liefert an den bis dahin gesperrten TRIAC-Schalter V13 einen Stromimpuls, der - zur Entlastung der Quelle für die Spannung U_{H} - zum Großteil aus dem Kondensator C4 bezogen wird Dieser Stromimpuls ist durch die Stromquelle V11, V12, R13 während der gesamten Einschaltzeit konstant auf dem vom Hersteller geforderten sicheren Zündstrom des TRIAC, z.B. auf 100mA, gehalten. Der TRIAC-Schalter V13 schaltet nun durch und legt die Pufferkondensator-Serienschaltung C5+C6 für eine bestimmte Zeit an den Zwischenkreis. Während dieser Zeit können die Pufferkondensatoren den Großteil ihres Energieinhaltes an den Verbraucher abgeben, z B eine Leistung von 1kW über 27ms bei einem typischen Anwendungsfall

## Patentansprüche

1. Netzgerät zur Versorgung von direkt oder über einen Umrichter an einem Gleichspannungszweig des Netzgerätes liegenden Verbrauchern, mit einem aus dem Netz aufladbaren Pufferkondensator (C, C5, C6), der den Gleichspannungszweig bei Netzausfall oder -einbruch noch eine bestimmte Mindestzeitdauer versorgt,
**dadurch gekennzeichnet, da**ß
der Pufferkondensator (C, C5 + C6) über eine eigene Ladeschaltung (3; C1, V7, V8 ) auf eine Spannung (U₂) aufladbar ist, die - unabhängig von Spannungsschwankungen im Gleichspannungszweig - im wesentlichen konstant ist und im wesentlichen dem oberen Grenzwert der Gleichspannung (U1) entspricht, auf welchen das Netzgerät dimensioniert ist,
und der Pufferkondensator über einen gesteuerten Schalter (S, V13) bei Unterspannung im Netz oder im Gleichspannungszweig an den Gleichspannungszweig aufschaltbar ist.

2. Netzgerät nach Anspruch 1, **dadurch gekennzeichnet, daß** der Steuereingang des gesteuerten Schalters (S, V13) an dem Ausgang einer Ansteuerschaltung (4; N1, N2, V11, V12) liegt, die zum Vergleich der Gleichspannung (U1) des Gleichspannungszweiges mit einer Referenzspannung (U_{ref}) eingerichtet ist.

3. Netzgerät nach Anspruch 1 oder 2, bei welchem das Netz ein Wechselstromnetz ist, **dadurch gekennzeichnet, daß** die Ladeschaltung (C1, V7, V8) eine an Wechselspannung liegende Spannungsverdopplerschaltung ist

4. Netzgerät nach einem der Ansprüche 1 bis 3, **dadurch gekennzeichnet, daß** zur Begrenzung der Kondensatorspannung (U2) eine Spannungsbegrenzerschaltung (D₂; V14, V15) vorgesehen ist.

5. Netzgerät nach Anspruch 4, **dadurch gekennzeichnet, daß** dem Pufferkondensator (C, C5, C6) eine Zenerdiode (D_{z}; V14, V15) parallelgeschaltet ist.

## Claims

1. Mains power supply unit for supplying consumers connected directly or via a converter to a direct voltage branch of the mains power supply unit, having a buffer capacitor (C, C5, C6) which can be charged from the mains and which continues to supply the direct voltage branch for a specific minimum period of time in the event of a failure or interruption in the mains power,
**characterised in that**
the buffer capacitor (C, C5 + C6) can be charged via a dedicated charging circuit (3; C1, V7, V8) to a voltage (U₂) which - irrespective of voltage fluctuations in the direct voltage branch - is substantially constant and corresponds substantially to the upper limit value of the direct voltage (U1), with respect to which the mains power supply unit is dimensioned,
and the buffer capacitor can be switched to the direct voltage branch by means of a controlled switch (S, V13) when there is undervoltage on the mains or on the direct voltage branch.

2. Mains power supply unit according to claim 1, **characterised in that** the control input of the controlled switch (S, V13) is connected to the output of a control circuit (4; N1, N2, V11, V12) which is arranged to compare the direct voltage (U1) of the direct voltage branch with a reference voltage (U_{ref}).

3. Mains power supply unit according to claim 1 or 2, wherein the mains system is an alternating current mains system, **characterised in that** the charging circuit (C1, V7, V8) is a voltage doubling circuit connected to alternating voltage.

4. Mains power supply unit according to any one of claims 1 to 3, **characterised in that** in order to limit the capacitor voltage (U2) a voltage limitation circuit (D_{z}; V14, V15) is provided.

5. Mains power supply unit according to claim 4, **characterised in that** a Zener diode (D_{z}; V14, V15) is connected in parallel with the buffer capacitor (C, C5, C6).

## Revendications

1. Bloc d'alimentation pour l'alimentation de récepteurs situés directement ou par l'intermédiaire d'un redresseur sur une branche de tension continue du bloc d'alimentation, avec un condensateur tampon (C, C5, C6) rechargeable sur le secteur, qui alimente la branche de tension continue encore pendant une durée minimale définie en cas de défaillance ou de rupture du réseau,
**caractérisé en ce que**
le condensateur tampon (C, C5 + C6) peut être rechargé par un propre circuit de charge (3 ; C1, V7, V8) jusqu'à une tension (Uz) qui est sensiblement constante, indépendamment des variations de tension dans la branche de tension continue, et correspond sensiblement à la valeur limite supérieure de la tension continue (U1), pour laquelle le bloc d'alimentation est conçu.
et le condensateur tampon peut être appliqué sur la branche de tension continue par l'intermédiaire d'un interrupteur (S, V13) commandé en cas de sous-tension sur le secteur ou dans la branche de tension continue.

2. Bloc d'alimentation selon la revendication 1, **caractérisé en ce que** l'entrée de commande de l'interrupteur contrôlé (S, V13) est disposée à la sortie d'un circuit d'amorçage (4 ; N1, N2, V11, V12), qui est aménagé avec une tension de référence (Uref) par rapport à la tension continue (U1) de la branche de tension continue.

3. Bloc d'alimentation selon la revendication 1 ou 2, sur lequel le réseau est un réseau de courant alternatif, **caractérisé en ce que** le circuit de charge (C1, V7, V8) est un circuit doubleur de tension appliqué sur la tension alternative.

4. Bloc d'alimentation selon l'une quelconque des revendications 1 à 3, **caractérisé en ce qu'**il est prévu un circuit limiteur de tension (Dzi, V14, V15) pour limiter la tension du condensateur (U2).

5. Bloc d'alimentation selon la revendication 4, **caractérisé en ce qu'**une diode de Zener (Dzi, V14, V15) est montée en parallèle avec le condensateur tampon (C, C5, C6).
